# EUROPEAN PATENT APPLICATION

(11) **EP 2 271 067 A1**
(43) Date of publication of application: **05.01.2011**
(21) Application number: 10181281.6
(22) Date of filing: 17.08.2001
(51) Int. Cl.: H04N 1/00, H04N 1/32

(54) **An additional information printing service for images**

(30) Priority: 17.08.2000 JP 2000247743
(62) Divisional of application: 01307019.8
(71) Applicant: DAI NIPPON PRINTING CO., LTD., Tokyo-to 162-8001 (JP)
(72) Inventor: Ando, Jitsuhiko, Tokyo-to 162-8001 (JP); Ohkubo, Takayuki, Tokyo-to 162-8001 (JP); Shibasaki, Naoji, Tokyo-to 162-8001 (JP)
(74) Representative: Needle, Jacqueline

(57) **Abstract**

A printing apparatus (201) provides an additional information printing service whereby a customer requesting a print of an image is provided with a printed article having additional information. This additional information may comprise points given to the customer in proportion to his utilization frequency of the system. The addition information may be given to the customer in response to a questionnaire. The additional information to be printed may contain shop information or advertising information.

## Description

The present invention relates to an additional printing service for images.

For example, individual service and information offer service are provided at the time of printing of the image data in response a customer request.

Since the image taken by the digital camera etc. is recorded as digital data, without using a lab, it can be printed out at home by using a personal computer and printer.

Moreover, a relatively compact image outputting apparatus capable of reading and outputting image digital data photographed by a digital camera or the like as well as capable of being installed at a relatively small space of a corner in a shop or on the street has been proposed. For example, JP-A-1 0-341303 discloses a post type image outputting apparatus comprising various kinds of interfaces corresponding to a plurality of different kinds of recording media, capable of reading and outputting image digital data from the various kinds of the recording media. The post type image output apparatus provides the handiness to be operated freely by customers so that they can print out desired photograph images instantaneously and take them back with them.

A shopping center, for example, can offer some unique services offered to customers, such as an information service of the recommended goods by insertion of a newspaper etc., a point service wherein points are given to the customer in proportion to the customer's usage of the shopping center, and any service such as reduction in price , etc., is made according to the given points. These services are not restricted to such a shopping center, but are performed in various types of industry. For example, such service is made on the DPE print store which develops a photograph. In a DPE print store, if a customer orders a print, points will be given to him according to the fee of print. Once the points accrued by the customer attains a fixed point, the print fee will be discounted according to the fixed point. Alternatively, as the service, an enlarged photograph etc. would be given with no charge.

Moreover, in recent years, by using the Internet etc., while performing advertisement of stores (shopping center etc.), a service where a coupon (discount ticket) etc. can be issued by a operation on the browsing screen is offered.

Of course, when a customer uses an image printing apparatus as described above, such additional services are not given. Thus, there is a large service gap between the case of using such image printing system and the case of using DPE print store, etc.

Moreover, the printing apparatus has the advantage that it can install anywhere, even in a small space. Therefore, once the printing apparatus is installed in a shop, and it uses for performing advertisement of the shop to the customer using printing apparatus, it is expected that it can perform timely and effective advertisement.

The present invention seeks to reduce this service gap.

According to the present invention there is provided an information printing system, which comprises a function of concurrently providing a printed article having additional information to a customer, at when a printing service system which prints an image datum into an image printed articles on a requirement of the customer and delivers it to the customer delivers the printed article.

Embodiments of the invention have the advantage that a compact printing apparatus can be installed anywhere, even in a small space. Therefore, once the printing apparatus is installed in a shop, it can be used for performing advertisement of the shop to the customer using printing apparatus. It is expected that it can perform timely and effective advertisement.

In an embodiment, the additional information printing service system may further comprises a point producing means which gives to the customer points in proportion to his utilization frequency of the system. The system may further comprises a questionnaire inputting means, and the printed article having additional information is provided at when the customer gives an answer to a questionnaire by the questionnaire inputting means. The additional information to be printed may contain at least one of information of the point, shop information and advertising information.

Since, in an embodiment, a printed matter which can give various information (recommended information, discount information, etc. on a neighboring shopping center) is added to the printed article which the customer demands and they are concurrently provided for a customer, a customer can acquire advantageous information. The donor who carries an advertisement can advertise efficiently and easily. Moreover, by adding service points according to utilization frequency as one form of service, and accumulating the service points, a customer can be provided with various services (discount service etc.), and the number of accumulation points can be checked with the additional information printed matter where it is printed. Furthermore, if an answer for a questionnaire can be obtained from a customer in another form of service, by using the waiting time of printing, the customer can acquire new information by receiving a printed article which printed new additional information (for example, a first-class information etc.) as thanks for giving answer. The donor of the printing matter can acquire an opinion for improving by the questionnaire result reflecting a customer's idea.

Furthermore, an additional information printing service system of the present invention may also comprise:
an inputting means for inputting an image datum and/or information.
a storing means for storing the input image data and/or information,
an image data/ information extracting means for extracting a image and/or information to be needed, from the stored data, and
a printing means for printing the input image datum and/or the extracted image datum and/or information by the extracting means.

Since this system is equipped with an input part as an inputting means by which a customer or a printing apparatus donor inputs image data or information, a database as a means to store the image data or information which carried out above mentioned input, a control part wherein with the demand from the above mentioned customer or printing apparatus, the information data demanded is specified from the stored image data or information data and the specified image data or information data is extracted, and further an output part (printer) as a printing means to print the image data which was input or demanded by the customer, and to print the information data, the service which was described above can be offered.

Furthermore, the additional information printing service system according to this invention may be characterized by the fact that the system is provided to a printing apparatus. By this fact, the customer can print freely and easily can print the image data of his wants at the shop (shopping center etc.) where the printing apparatus is installed, without going to the print specialty shop, but along with the same additional service as that he receives at the print specialty shop.

Embodiments of the present invention will hereinafter be described, by way of example, with reference to the accompanying drawings, in which:
Fig. 1 is an outline view of an additional information printing system;
Fig. 2 is a block diagram showing an embodiment of the additional information printing system;
Fig. 3 is a perspective view of a printing apparatus;
Fig. 4 is a flow chart of the operation of a system of the third aspect of the invention; and
Fig. 5 is an example of an additional information print with which a customer is provided.

The present application is divided from European application EP1182862. Descriptions and drawings have been omitted for conciseness from this application and reference is made to the examples and embodiments described in the parent case.

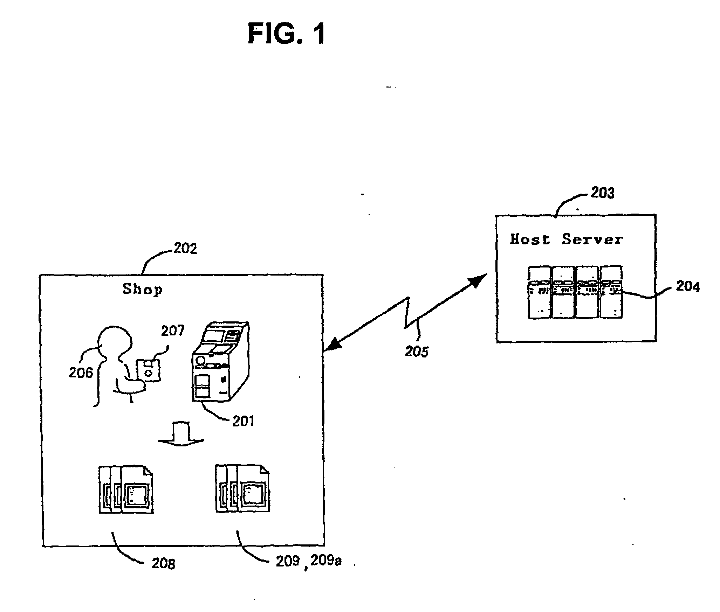

In the following description, the term "image data", is not restricted to the image data recorded on recording media, such as a flexible disk, but analog images, such as a photograph, may also be included. The term "printing apparatus" is not limited to a specific printing apparatus, for example, as shown in Fig. 1. Any kind of printing apparatus may be used just as long as it has a fee charging function. With apparatus as described, a customer 206 can obtain a printed article 208 of the image data 207 by himself.

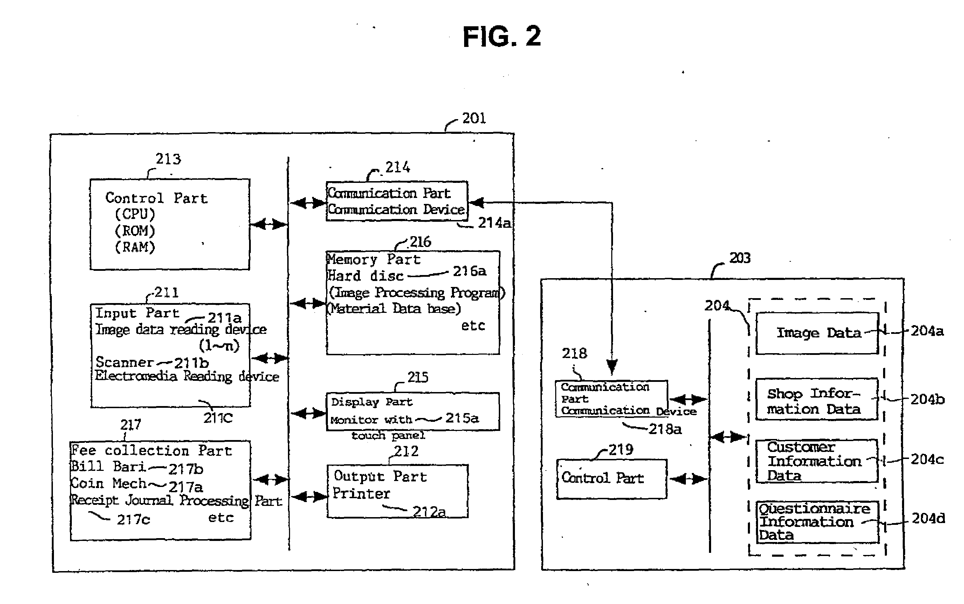

Fig. 1 shows an outline view of an addition information printing system of the invention, and Fig. 2 shows a system construction thereof. As shown in these Figures, the system has printing apparatus 201 which is installed in a shop 202. A database 204 installed on a host server 203 and the printing apparatus 201 and database 204 are connected through a communication circuit 205. If the shop 202 has ample space for installing the database 204, the connection between the printing apparatus 201 and the database 204 within the same shop can be connected with any connection code or line. Further they may be connected by way of a network. In this system, a customer 206 requests that an image data 207 is printed as the printed article 208 by using the printing apparatus 201 installed in the shop 202. When the customer request is made, various information services such as advertising information, personal information, etc. can be offered as the printed article 209 which is added to the printed article 208.

As shown in Fig. 2, in the printing apparatus 201 installed in the shop 202 includes an input part 211 for inputting image data 207, an output part 212 for outputting the input image data 207, a control part 213 which controls through from input to output, a communications part 214 for communicating with the exterior, a display part 215 for displaying an operation procedure, a memory part 216 which processes procedure programs, such as an operation procedure and a printing procedure, etc., and a fee collection processing part 217 for collecting the charge concerning the printing. These parts 211,212,213,214,215,216 and 217 are connected via a bus 210.

The input part 211 may be equipped with image data reading apparatus 211a containing various reading devices 1 - n corresponding to various kinds of recorded media. Image data reading apparatus 211a may include scanner 211b and electronic media reading devices 211c. Scanner 211b is used to read analog images, such as photographs, and input as digital image data. Electronic media reading apparatus 211c is used to input image data recorded on the electronic media. Moreover, electronic media reading device 211c contains the various reading devices corresponding to various kinds of recording media. As an example of electronic media, e a floppy disk, a PC card, MO, smart media, a compact flash, etc. may be cited. A customer can input the image data currently recorded on the brought recording media using corresponding reading apparatus.

The output part 212 may be equipped with the output unit for outputting the image data input by the input part 211 as analog images, such as a photograph. An output unit is printer 212a. As a kind of this printer 212a, a sublimation transfer formula printer may be used.

The control part 213 may be equipped with CPU, ROM, RAM, etc. for controlling the flow of data (information), memorizing temporarily, or calculating addition of a point etc. Moreover, it may have a storing means for saving the image data input according to the request of a customer. Moreover, it has an extraction means by which the image data specified by demand of a customer always can be extracted from the image data stored by the storing means.

The system may have the hard disk 203 (mass memory medium) as a memory part 216. A program is stored in a hard disk 203 and the control part 213 controls each apparatus connected through the bus 210 according to the program. As the program stored in hard disk 216a, for example, an image processing program for processing the input image, a questionnaire program for acquiring information by the questionnaire, a point addition program for supply and adding a point to the customer embracing the customer's use situation, as well as a the reading program corresponding to each recording media, a print control program, fee collection program, an addition information print program, etc., are exemplified. Each programs may read when needed, and various kinds of means are performed.

The display part 215 is equipped with monitor 215a with touch panel, and displays the operation guidance for performing the program memorized by the memory part 216. According to the displayed operation guidance, a series of operations from reading of image data to the output of printed article can be performed by performing selection and execution.

The fee collection processing part 217 is equipped with coin mech 217a, bill bari 217b, and receipt journal processing part 217c, and performs fee collection processing which starts the printing from the printed article which the customer demanded, printing number of sheets, etc. The coin mech 217a and/or bill bari 217b perform fee collection processing of judgment of genuineness of the coin or bill inserted for the fee payment, the judgment of the kind thereof, the amount calculation, the discharge of the change or the like. Receipt journal processing part 217c prints the printing menu, the collected fee amount or the like on a receipt paper and discharges the receipt.

The communications part 214 has communication device 214a. Communication device 214a can communicate with the exterior, and can perform movement of data etc. The exterior may be, for example, the host server 203. The database 204 for storing image data 207 is prepared for the host server 203, image data 207 is saved in the database 204, or the saved image data 207 is extracted.

The host server 203 may be equipped with the communications part 218, the control part 219, and a database 204. The communications part 218 has communication device 218a. Communication device 218 is connected with communication device 214a with which printing apparatus 201 was equipped through the communication circuit 205. The control part 219 performs storing and extraction control of the image data 207 demanded from printing apparatus 201, or the information data 204b and 204c.

Image data 204a, shop information data 204b, and customer information data 204c may be stored in a database 204. Image data 204a is image data 204a when a customer 206 uses printing apparatus 201. Shop information data is the information on shops 22 (shopping center etc.) and advertisement / advertising information that printing apparatus 201 was installed. For example, they are the recommended information, coupon information, and the other member information on the point card service which a shop deals with, on a shop that printing apparatus was installed. The administrator of printing apparatus 201 mainly inputs this information using printing apparatus 201. Moreover, shop information data can carry out the addition of change and new information etc. at any time. Customer information data is personal information data of the customer using printing apparatus 201. For example, it is point data which adds the number of points and is added each time according to the use situation of a customer individual's printing apparatus. Customer information data is automatically updated at any time, whenever a customer uses.

Thus, it has the input part 211 as an inputting means by which a customer 206 or a printing apparatus donor inputs image data 207 or information into printing apparatus 201. It has a database 204 as a means to store the image data 207 or information which carried out the input. With the demand from the above mentioned customer 206 or printing apparatus 201, the information (204a-204c) demanded from stored image data 204a or the information (204b, 204c) is specified, and the work which extracts specified image data 204a or the information (204b, 204c) is done by the control part (213, 219) (controlling). The image data 207 input or demanded by the customer 206, and information (204b ,204c) while having the output part 212 (printer 212a) as a printing means to print 204c, printing the image data 207 which accepted the demand of a customer 206, and the customer 206 input or demanded and offering the printed printed article 208. It considered as the addition information print service system which provides a customer 206 with the printed article 209 which printed information (addition information).

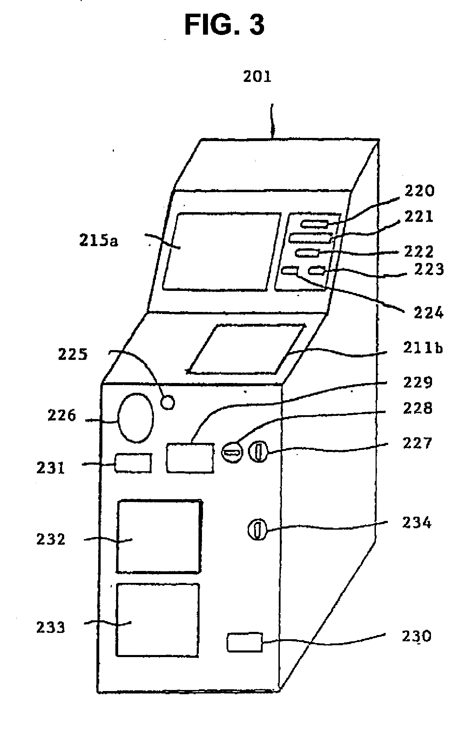

A general view of printing apparatus is shown in Fig. 3. As illustrated, a screen of monitor 215a with touch panel is arranged at the upper row part front of the main part of printing apparatus 201. As for this screen, CRT and a liquid crystal panel are used. This monitor 215a with touch panel also demonstrates the function as a means to perform input operation in an order inputting means, a questionnaire inputting means, etc. while demonstrating the function as a display means to display guidance of operation, the situation of operation, the read image or the processed image, etc.

As a image input part 211, the insertion ports 220-224 of image data reading apparatus 211a which can read the image data recorded on various recording media are formed beside the screen of monitor 215a with touch panel. A scanner 211b reading surface is provided on a horizontal part dividing the upper part and the lower part for reading the image of a printed article and processing the same to digital data.

In this embodiment, as the insertion ports for the various recording media, specifically, a flexible disc insertion port 220, a CD-ROM insertion port 221, a PC card insertion port 222, a smart medium insertion port 223, and a compact flash insertion port 224 at a position on the whole. A shutter (not shown) may be provided on each insertion port 220-224 for protecting these ports.

In the lower part of the main body, a maintenance key 225, a speaker 226, a coin insertion port 227, a coin return lever 228, a bill insertion port 229, a change return port 230, a receipt outlet port 231, a printed article (for standard printing) outlet port 232, a printed article (for pre-cut seal) outlet port 233, and a front door opening/closing key 234 are disposed.

The maintenance key 225 is a key for switching an ordinary drive mode capable of accepting a customer, and an administration mode for setting the image printing system or maintenance by an administrator. In management mode, the color correlation for the printed article to output from a printer outputting like standard coloring information can be performed if needed suitably. The speaker 226 is for reproducing the sound, BGM, effect sound or the like while waiting or operation. The maintenance key 225 is a key which changes the usual operation mode which can receive a customer, and the management mode in which an administrator performs a setup and maintenance of a image printing system. In management mode, the color compensation for the printed article to output from a printer outputting like standard coloring information can be performed if needed suitably. A speaker 226 can reproduce a sound, BGM, a sound effect, etc. during standby and operation.

The coin insertion port 227 or the bill insertion ports 229 is formed in order to pay a charge. The coin return lever 228 is used when a coin is choked. Moreover, when the coin return lever 228 is turned, or when there is change to the injection amount of money, it is from the change return port 235.

The receipt outlet port 231 constitutes a part of the receipt producing means and the order receipt note producing means. After collecting the fee by the fee charging means, a receipt with the collected amount and the order content printed is discharged from the receipt outlet port 231.

The printed article (for standard printing) outlet port 232 and the printed article (for pre-cut seal) outlet port 233 constitute parts of the printing means which is stored inside of the main body. A printed article is discharged from the printed article outlet port 232 or the printed article outlet port 233.

By turning the front door opening/closing key 234, the front door is opened so that the maintenance work for each device installed inside the housing can be executed. In the housing of the main body 1, each main body is installed corresponding to the screen of the monitor 215a with a touch panel, the insertion port 220-224, and the scanner 211b reading surface. A volume adjusting part is installed corresponding to the speaker 226. Corresponding to the coin insertion port 227, the coin return lever 228, the bill insertion port 229, and the change return port 230, a coin mech 217a (coin processing device) for identifying the coins, storing, and returning the change, a bill bari 217b (bill processing device) for identifying the bills, and storing, and a safe for storing the coins in case the coin mech 217a is fill, are installed. Corresponding to the receipt outlet port 231, a receipt printer is installed. Furthermore, corresponding to the printed article outlet port 232, and the printed article outlet port 233, a printer 212a is installed.

Moreover, although it is not apparently recognized by the external appearance, inside the housing of the main body, a personal computer 213 including a control unit for controlling each device in the image outputting apparatus , a power source box for converting the voltage, an interruptible power supply device for preventing breakage of the CPU, the hard disc or the like in the control unit at the time of blackout or the like are installed.

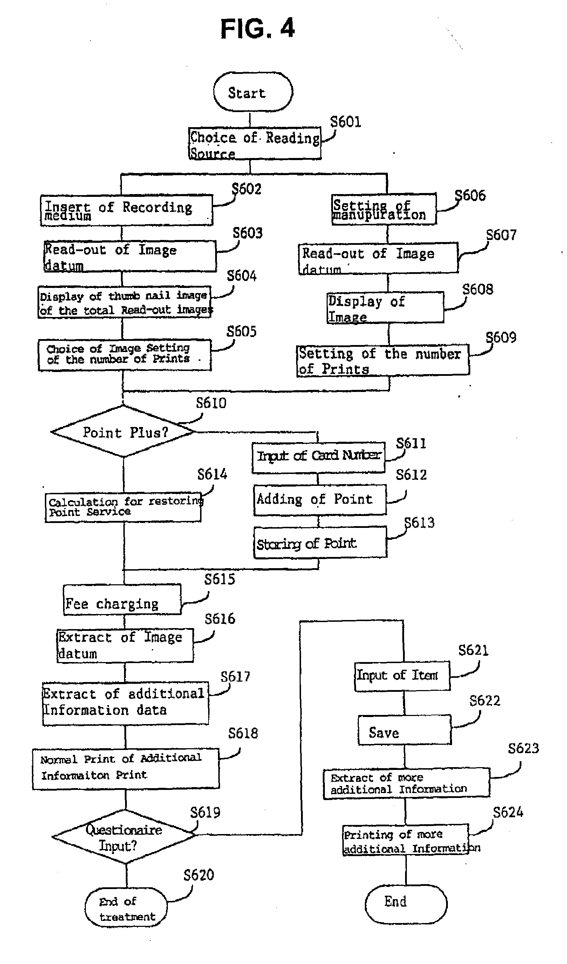

A flow chart showing the operation printing apparatus 201 is shown in Fig. 4. As shown in this figure, when printing an image data by using this printing apparatus, first, a customer selects a reading source (Step S601). When inputting image data using recording media, such as a flexible disk, the recording media is inserted in image data reading apparatus 211a as a predetermined input part 211 which can read the recording medium with which image data was recorded (Step S602), and image data is read (Step S603). A list of the thumb nail images of the image currently recorded on recording media is displayed on monitor 215a with touch panel of printing apparatus 201 (Step S604), and an image data (print) to be printed, its printing number of sheets, etc. are set up (Step S605). When inputting image data using analog data, such as a photograph, since the guidance screen in a setup of image data, such as a photograph, is displayed on monitor 215a with touch panel as a display part 215. According to the guidance, manuscripts (photograph etc.) are set to image data reading apparatus 211a (scanner 211b) as an input part 211 (Step S606), and image data is read (Step S607). Since the image was displayed on monitor 215a with touch panel of printing apparatus 1 (Step S608) when image data was read, if necessary, after adjusting such as expansion, reduction , move or rotation of a image etc., printing (print) number of sheets etc. is set up (Step S609).

Next, a charge is determined according to the set up situation. A charge is changed by the existence of point addition service. ("Point addition service" is a form which adds the number of points according to a customer's use situation, and offers various services with the number of points.) The customer chooses existence of point addition, when a setup of the form of printing, number of sheets, etc. is completed (Step S61 0). When performing point addition, the card numbers (ID number, password, etc.) of a point card are input (Step S611). By inquiring the card number to the customer information data stored in the database, the customer is specified and to the specified customer information data points is added (Step S612), and it stores in a database (Step S613). When not performing point addition, reduction operation of point service is performed according to the situation used this time (Step S614), and discount etc. is served.

Here, the service correspondence table having shown the service outline is shown in Table 1. The data of Table 1 is beforehand stored in the memory part (hard disk) of printing apparatus, and reads and processes the information which corresponds in case the number of points is added, or in case the charge concerning printing is computed.

**Table 1: SERVICE CORRESPONDENCE TABLE**

| Print Mode | Service Point (Point) | Discount (yen) |
|---|---|---|
| Digital Photo Print | 1 | 5 |
| Seal Print | 4 | 20 |

| | | |
|---|---|---|
| (per 1 print) | | |

If a printing form is a digital photograph print as shown in Table 1, when performing point addition per print, the number of points is added 1 point, and when not performing point addition, discount of 5 yen is performed. On the other hand, if a printing form is a seal print, when performing point addition per print, the number of points is added 4 point, and when not performing point addition, discount of 20 yen is performed. For example, when a customer performs a setup which prints 4 digital photograph print and 4 seal prints at a time, and it performs point addition, since seal prints is added 16 point, a digital photograph print is added 4 point and a total of 20 points. On the other hand, when not performing point addition, since 80 yen is discounted for the seal print and 20 yen for digital photograph print, a total of 100 yen is discounted from the normal charge.

Next, fee collection processing is performed (Step S615). Fee collection processing computes normal charge by setup of a printing form, number of sheets, etc. which the above mentioned customer set up. Then, when there is service of discount etc., the charge to be indicated is calculated by deducting discount money from the normal charge. Once a charge is computed, the print data of the charge will be created and it will display on monitor 215a with touch panel as a display part 215. A customer peruses the monitor 215a, and checks a charge. A customer injects the displayed charge from the predetermined entrance slot after a check.

After fee collection processing is completed, while extracting the image data which extracted the image data specified from recording media or the scanner (Step S616), and was specified out of image data 204a stored in the database 204, addition information data is extracted from shop information data 204b stored in the database 204, and customer information data 204c (Step S617). The image data and addition information data which were extracted are printed, and a customer is provided with the usual print and an addition information print (Step S618). Moreover, the screen of the purport for asking cooperate in a questionnaire using the time of the waiting for printing is displayed (Step S619). Processing is ended when the customer will not cooperate (Step S620). When the customer will cooperate, a questionnaire item is displayed and a customer inputs an item according to the display (Step S621). The input information is saved as questionnaire information data 204d in a database 204 (Step S622). This questionnaire information data 204d, it totals at any time and uses for an improvement of a shop etc. To the customer who had cooperated in a questionnaire, superior addition information data is further extracted from shop information data 204b etc. (Step S623). The extracted additional addition information data is printed, a customer is provided with the superior addition information print (Step S624), and processing is ended.

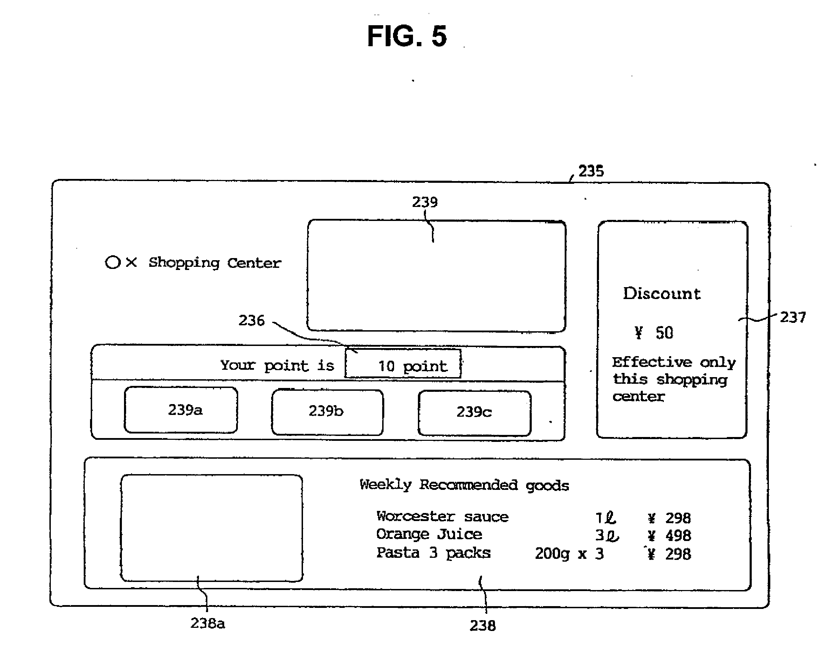

An example of a display of the addition information print with which a customer is provided is shown in Fig. 5. When printing apparatus 201 is installed in the shopping center or the like, the addition information print 235 includes the number of point accumulation as point information 236 on a shopping center management card, the advertisement 238 and its image 238a which are the loss leader or recommended goods of a shopping center, the discount ticket 237 which can be used in the shopping center and as shop information, the other advertising information 239, 239a-239c etc. is printed with the form arranged in the predetermined position, and a customer is provided with the printed article. What is arranged where sets up in advance, and it extracts each information from a database 204, embeds it automatically, and prints it.

Thus, as a form of the service to a customer 206, the point addition program is beforehand stored in the memory part 216 of printing apparatus 201 and it is shown in Step S610 - Step S614, while adding a point automatically according to the situation that the customer 206 used printing apparatus 201, the control part 213 performs addition processing with a former point, and it may store the number of points as customer information data in a database. When providing a customer 206 with the printed article 9 which printed addition information, it is desirable to also specify the above mentioned point information 236 (the number of accumulation). Moreover, the questionnaire program as a questionnaire inputting means is beforehand stored in the memory part 216 of printing apparatus 201. When a customer 206 has answer to a questionnaire as a questionnaire program is performed and it is shown in Step S619 - Step S624, while printing the printed article of Step S618, a printed article with new addition information may be added, so as to provide for a customer 206. Moreover, the printed article which printed the addition information in the above mentioned service may have at least one of printed article with which the point information 236 (the number of accumulation), the shop information 237, 238, and 238a (an advertisement, recommended information, etc.), an advertisement 239 - 239c information, etc. was printed at least. Examples of printed articles are described in the parent European patent application No. EP1182862.

As mentioned above, although an operation form of a printing apparatus equipped with an addition information print service system has been illustrated, the invention is not limited to this operation form, but can carry out according to various forms. Similarly, printing apparatus is not limited to this form.

With embodiments of an addition information printing system of the invention, a customer can receive the information on the service (point addition service, discount service) according to the use situation, and others etc., like the service currently offered in other DPE shops etc. Moreover, in the shopping center in which the printing apparatus was installed, effective advertisement can be performed with the timely hit of the shop. Furthermore, an advertising income can also be obtained by inviting other advertisements.

## Claims

1. An additional information printing service system, which comprises a function of concurrently providing a printed article having additional information to a customer, such that when a printing service system prints an image datum into an image printed article at the request of the customer, the printed article is delivered to the customer.

2. An additional information printing service system as claimed in Claim 1, wherein the system further comprises a point producing means which gives to the customer points in proportion to his utilization frequency of the system.

3. An additional information printing service system as claimed in Claim 1, wherein the system further comprises a questionnaire inputting means, and the printed article having additional information is provided at when the customer gives an answer to a questionnaire by the questionnaire inputting means.

4. An additional information printing service system as claimed in Claim 1, wherein the additional information to be printed contains at least one of information of the point, shop information and advertising information.

5. An additional information printing service system as claimed in Claim 1, wherein the system comprises
an inputting means (211) for inputting an image datum and/or information,
a storing means (216) for storing the input image data and/or information,
an image data/ information extracting means (213) for extracting a image and/or information to be needed, from the stored data, and
a printing means (212) for printing the input image datum and/or the extracted image datum and/or information by the extracting means.

6. An additional information printing service system as claimed in Claim 1, which is provided to a printing apparatus (201).
